# EUROPEAN PATENT SPECIFICATION

(11) **EP 4 342 684 B1**
(45) Date of publication and mention of the grant of the patent: **20.05.2026**
(21) Application number: 22804223.0
(22) Date of filing: 13.01.2022
(51) Int. Cl.: B60C 11/03, B60C 5/00, B60C 11/13, B60C 11/04, B60C 11/11

(54) **PNEUMATIC TIRE**
LUFTREIFEN
PNEUMATIQUE

(30) Priority: 18.05.2021 JP 2021084018
(43) Date of publication of application: 27.03.2024
(73) Proprietor: BRIDGESTONE CORPORATION, Chuo-ku Tokyo 104-8340 (JP)
(72) Inventor: YAMASHITA, Norimasa, Tokyo 104-8340 (JP)
(74) Representative: Marks & Clerk LLP
(86) International application number: PCT/JP2022/000934
(87) International publication number: WO 2022/244300

(56) References cited:
- EP-A1- 0 648 622
- EP-A1- 0 722 851
- EP-A1- 3 501 849
- WO-A1-2014/084320
- WO-A1-2018/078476
- WO-A1-2018/179755
- WO-A1-2019/073714
- WO-A1-2020/231389
- WO-A1-2020/231659
- JP-A- 2000 094 907
- JP-A- 2001 071 711
- JP-A- 2007 099 024
- JP-A- 2011 189 846
- JP-A- 2013 216 118
- JP-A- 2014 051 287
- JP-A- 2014 234 091
- JP-A- 2015 151 087
- JP-A- 2016 043 709
- JP-A- 2016 068 906
- JP-A- 2018 176 930
- JP-A- 2019 500 270
- JP-A- H0 450 006
- JP-A- H11 310 011
- JP-U- H0 337 003
- US-A- 4 832 099
- US-A- 4 953 604
- US-A1- 2015 224 828

## Description

### TECHNICAL FIELD

The present invention relates to a pneumatic tire (hereinafter, also simply referred to as a "tire"), and relates more specifically to a pneumatic tire associated with the improvement of a tread pattern provided on the tread, and particularly to a pneumatic tire that is a driving wheel for a two-wheeled vehicle or a three-wheeled vehicle.

### BACKGROUND ART

Generally, a tread pattern composed of a plurality of groove portions and land portions is formed on the tread of a pneumatic tire to secure roadability in accordance with the usage. In particular, in the case of a tire to be used as a driving wheel of an off-road motorcycle about which running on an unpaved road surface is mainly assumed, a block pattern having directionality is widely used to obtain traction performance on a soft-soil road surface, in which directionality, the width-direction grooves arranged across the tire equator describe a pattern convex in the direction opposite to the rotational direction of the tire.

As an example of a conventional technology associated with such a block pattern, Patent Document 1 discloses a motorcycle tire the rotational direction of which is specified, and which has land portions sectioned by a plurality of width-direction grooves and a plurality of circumferential grooves in the central portion of the tread of the tire, in which at least one of the land portions has a pattern that satisfies predetermined conditions. Attention is also drawn to the disclosures of US4832099A, WO2018/179755A1, WO2020/231659A1, EP3501849A1 and EP0648622A1.

### RELATED ART DOCUMENT

### PATENT DOCUMENT

Patent Document 1: WO2020/031641

### SUMMARY OF THE INVENTION

### PROBLEMS TO BE SOLVED BY THE INVENTION

As described in Patent Document 1, it is common that, in the tread pattern of a driving wheel, the width-direction grooves arranged across the tire equator usually have a pattern convex in the direction opposite to the rotational direction of the tire.

On the other hand, in the case of a tire to be used as an on-road driving wheel about which running on a paved road surface is assumed, such a pattern having a high negative ratio as for off-road use does not make it possible to secure sufficient traction, and thus, it is necessary to decrease the ratio of grooves, and simultaneously secure the water discharge efficiency.

However, in the case of a tire to be used as an on-road driving wheel, simply decreasing the ratio of grooves, and providing width-direction grooves having a convex pattern and having a conventionally common directionality as described in Patent Document 1 does not make it possible to obtain water discharge efficiency and traction performance on a paved road surface. In particular, such a tire does not make it possible to sufficiently obtain water discharge efficiency that is not a problem with a tire for an off-road two-wheeled vehicle.

In view of this, an object of the present invention is to provide a technology in which improving the tread pattern of a pneumatic tire to be used as an on-road driving wheel enhances the water discharge efficiency without impairing the traction performance.

### MEANS FOR SOLVING THE PROBLEMS

The present inventor has studied vigorously and has consequently come to complete the present invention through the discovery that allows the width-direction grooves arranged across the tire equator to have a pattern convex in the rotational direction of a tire, unlike a conventionally common tire, and makes it possible to obtain a tire that secures traction performance suitable for an on-road driving wheel and simultaneously to achieve enhanced water discharge efficiency.

That is, the present invention is a pneumatic tire for use as a driving wheel as claimed in claim 1.

In a tire according to the present invention, the ground contact surface preferably contains two to six of the width-direction grooves. In addition, in a tire according to the present invention, the average value Wg of the groove widths of the width-direction grooves, as measured on the tire equator, is suitably 4 mm or more and 13 mm or less. Furthermore, in a tire according to the present invention, the ratio r/Dw of the radius of curvature, r, to the maximum groove depth Dw of the width-direction groove is preferably 15% or more, wherein the radius of curvature is based on the boundary between the groove wall and the groove bottom on the leading side of the tire.

Furthermore, in a tire according to the present invention, a plurality of circumferential grooves are provided to allow the plurality of width-direction grooves to be in communication with each other on the tread. Assuming that, among the plurality of circumferential grooves provided between a pair of the width-direction grooves, the circumferential groove the closest to the tire equator is referred to as a circumferential center-portion groove, and another circumferential groove is referred to as a circumferential shoulder-portion groove, the ratio Ds/Dc of the maximum groove depth Ds of the circumferential shoulder-portion groove to the maximum groove depth Dc of the circumferential center-portion groove preferably satisfies 0.1 to 0.6.

In addition, in a tire according to the present invention, a plurality of blocks are defined on the tread. The ratio Lc/Wg is preferably 500% or less, assuming that Lc, as measured on the tire equator, is the average value of the lengths of center blocks located on the tire equator in the circumferential direction of the tire, the center blocks being among the plurality of blocks, and that Wg, as measured on the tire equator, is the average value of the groove widths of the width-direction grooves.

Here, unless otherwise specified, the dimensions of a tire in the present invention have the values measured using a tire that is put on a rim prescribed in an industrial standard effective in an area where the tire is produced and used, and that is filled at an internal pressure prescribed in the industrial standard, and is left under no load. In addition, the industrial standard is, for example, JATMA (The Japan Automobile Tyre Manufacturers Association, Inc.) YEAR BOOK in Japan, ETRTO (European Tyre and Rim Technical Organisation) STANDARD MANUAL in Europe, or TRA (THE TIRE and RIM ASSOCIATION INC.) YEAR BOOK in the U. S.A.

### EFFECTS OF THE INVENTION

According to the present invention, using the above-described constitution for a pneumatic tire to be used as an on-road driving wheel makes it possible to enhance the water discharge efficiency without impairing the traction performance.

### BRIEF DESCRIPTION OF THE DRAWINGS

FIG. 1 is a partial development depicting the tread of a two-wheeled vehicle tire that is an example of a pneumatic tire according to the present invention.
FIG. 2 is a cross-sectional view of the two-wheeled vehicle tire in the width direction, taken along a line Y-Y in FIG. 1.
FIG. 3 is a front view depicting the tread of the two-wheeled vehicle tire depicted in FIG. 1.
FIG. 4 is a cross-sectional view of the width-direction groove, taken along a line X1-X2 in FIG. 1.

### MODE FOR CARRYING OUT THE INVENTION

Embodiments of the present invention will now be described in detail with reference to the drawings.

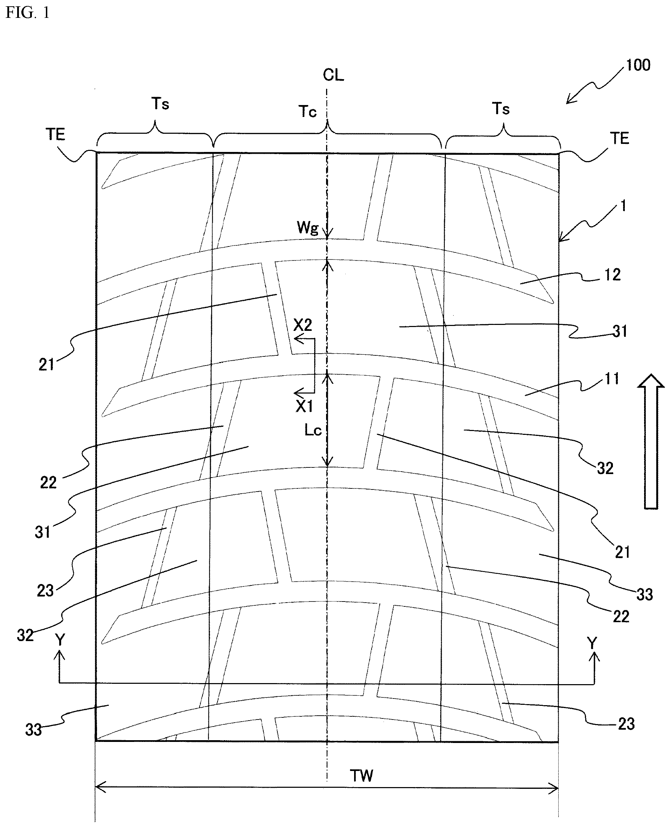

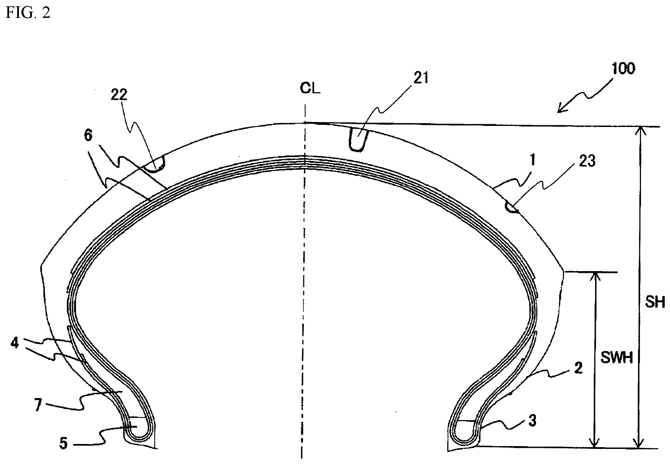

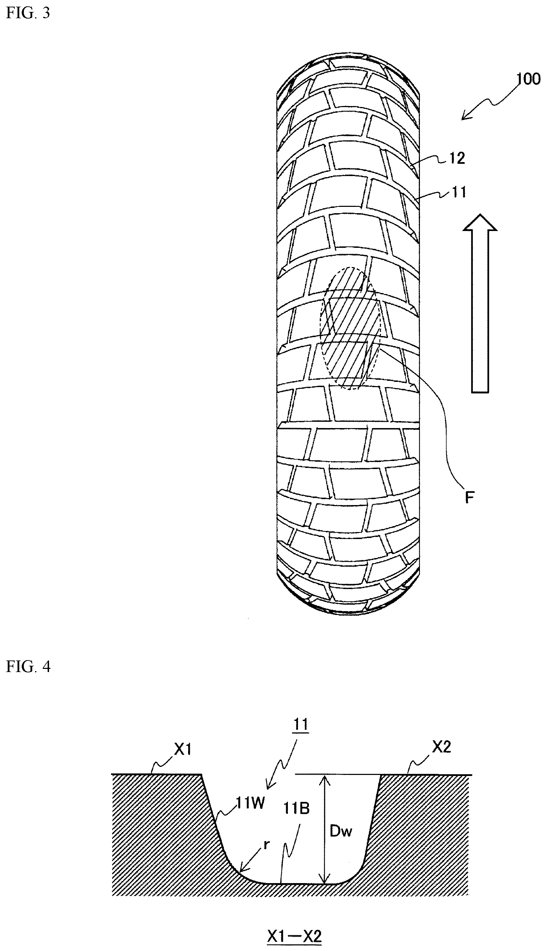

FIG. 1 depicts a partial development of the tread of a two-wheeled vehicle tire that is an example of a pneumatic tire according to the present invention. FIG. 2 depicts a cross-sectional view of the two-wheeled vehicle tire in the width direction, taken along a line Y-Y in FIG. 1. FIG. 3 depicts a front view of the tread of the two-wheeled vehicle tire depicted in FIG. 1. FIG. 4 depicts a cross-sectional view of the width-direction groove, taken along a line X1-X2 in FIG. 1. In addition, the arrows in FIG. 1 and FIG. 3 denote the rotational direction of the tire, and the hatched-line-shaded region surrounded by the dashed line in FIG. 3 denotes a ground contact surface.

As depicted, a pneumatic tire 100 according to the present invention includes: a tread portion 1 having a ground contact portion formed therein; a pair of side-wall portions 2 each extending inwardly in the radius direction of the tire from both ends of the tread portion; and bead portions 3. In addition, a pneumatic tire 100 according to the present invention is a tire for use as a driving wheel, including, on the tread of the tire, a directional pattern containing a plurality of width-direction grooves 11 and 12.

In the present invention, a half-width region of the tread, as measured from the tire equator CL to a tread-to-ground contact end TE along the surface of the tire in a cross section of the tread portion 1 in the width direction of the tire, is bisected into two regions that are referred to as the tread center portion Tc and the tread shoulder portion Ts respectively in this order from the tire equator CL. That is, assuming that the distance between the tread-to-ground contact ends TE, as measured across the surface of the tire, is a tread width TW, the tread center portion Tc is a region which corresponds to 1/2 of the tread width TW, and across which the tire equator CL is centered, and the tread shoulder portions Ts are a pair of regions each of which corresponds to 1/4 of the tread width TW, and which are each located outside the tread center portion Tc in the width direction of the tire.

As depicted in FIG. 1, in a tire according to the present invention, the plurality of width-direction grooves 11 and 12 provided on the tread extend across the tread center portion Tc that is a region which corresponds to 1/2 of the tread width TW, and across which the tire equator CL is centered. In addition, the width-direction grooves have a pattern convex in the rotational direction of the tire on the surface of the tire.

According to the present invention, the width-direction grooves 11 and 12 extending across the tread center portion Tc have a pattern convex in the rotational direction of the tire, whereby it is made possible to obtain a tire having an excellent water discharge efficiency needed for on-road usage on a paved road surface, and particularly wet performance that can satisfy the water discharge efficiency of a vehicle running with the body tilted. On the other hand, a tire according to the present invention also makes it possible to secure the traction performance needed for a driving wheel.

As above-described, traction performance on a soft-soil road surface is conventionally and commonly prioritized for an off-road tire as a driving wheel. Thus, the width-direction grooves arranged across the tire equator have a pattern convex in the direction opposite to the rotational direction of the tire, but the present inventor has made studies, and consequently discovered that giving a pattern convex in the direction opposite to this makes it possible to obtain a tire that achieves both water discharge efficiency and traction performance. Compared with this, a tire that is not driven does not require traction performance, and accordingly, it is common that the width-direction grooves arranged across the tire equator are arranged so as to have a pattern convex in the rotational direction of the tire, but the width-direction grooves having such directionality as in the present invention have hitherto not been adopted for a tire as a driving wheel in the art.

For example, in the case of a motorcycle tire as one example of a pneumatic tire according to the present invention, the front tire is not driven, and the rear tire is used as a driving wheel, and accordingly, the tire according to the present invention is preferably used as a rear tire.

Furthermore, the tread of the pneumatic tire 100 according to the present invention, as depicted, has what is called a block pattern in which a plurality of blocks 31 and 32 are defined by a plurality of width-direction grooves 11 and 12 and a plurality of circumferential grooves 21, 22, and 23. As above-described, however, such a block pattern is generally used for an off-road tire, and there are not many examples in which the block pattern is adopted for an on-road tire about which running on a paved road surface is assumed.

The arrangement conditions for the width-direction grooves 11 and 12 in the pneumatic tire 100 according to the present invention are not particularly limited as long as the conditions include extending across the tread center portion Tc, having a pattern convex in the rotational direction of the tire, and the pattern of each of the width-direction grooves 11 and 12 is a convex one composed of one circular arc, and may have a straight-line portion. As well as the pattern of each of the width-direction grooves 11 and 12 being composed of one circular arc, the radius of curvature, R, of each of the width-direction grooves 11 and 12 is preferably 80 mm or more and 400 mm or less, more preferably 120 mm or more and 370 mm or less, with respect to the tire equator CL. Bringing the radius of curvature, R, within the above-described ranges makes it possible to inhibit the stress concentration at the groove bottom at the top of the convex pattern, to thereby inhibit a crack or the like from being generated, and to secure durability, and also makes it possible to inhibit the generation of a difference in wear between the trailing side and the leading side, and to thereby inhibit uneven wear from being induced. In this regard, in the example depicted, the width-direction grooves 11 and 12 are formed in the shape of a circular arc having the center of curvature on the rear side in the rotational direction of the tire.

In addition, the length of each of the width-direction grooves 11 and 12 in the width direction of the tire needs to be set at 1/2 or more of the tread width TW. As depicted, the width-direction grooves 11 and 12 are provided so as to suitably extend across the tread center portion Tc up to the tread shoulder portion Ts, and be terminated at the tread-to-ground contact end TE or the vicinity thereof. Allowing the width-direction grooves 11 and 12 to extend up to the tread-to-ground contact end TE or the vicinity thereof at both sides of the tire in the width direction makes it possible that, in particular, a two-wheeled vehicle tire more favorably secures the water discharge efficiency of a vehicle running with the body tilted.

Furthermore, the groove width of each of the width-direction grooves 11 and 12 is preferably 4 mm or more and 13 mm or less, more preferably 5 mm or more and 11 mm or less, as the average value Wg of the groove width, as measured on the tire equator CL. Bringing the groove width of each of the width-direction grooves 11 and 12 within the above-described ranges makes it possible to more favorably achieve both water discharge efficiency and traction performance, and thus, is preferable. Here, the groove width in the present invention means the maximum width of the opening in a cross section perpendicular to the direction in which the groove extends. In this regard, the maximum groove depth of each of the width-direction grooves 11 and 12 can be 0.6 mm or more and 12 mm or less from the viewpoint of achieving both traction performance and water discharge efficiency.

Here, furthermore with reference to the groove width Wg of each of the width-direction grooves 11 and 12, the value of the ratio Lc/Wg is preferably 500% or less in percentages, assuming that Lc/Wg is the ratio of the average value Lc of lengths in the circumferential direction of the tire to the groove width Wg, wherein the lengths are the lengths of the center blocks 31 located on the tire equator CL among a plurality of blocks 31 and 32 arranged on the tread, and are measured along the tire equator CL. Allowing the ratio of the circumferential length of the center block 31 to the groove width Wg of each of the width-direction grooves 11 and 12 to satisfy the above-described range is preferable on account of the effect of enhancing on-road straight-line stability, in a case where a tire according to the present invention is a two-wheeled vehicle tire. The value of the ratio Lc/Wg is more preferably 250 to 460%.

Furthermore, as shown in FIG. 3, the width-direction grooves 11 and 12 are preferably arranged in such a manner that the number of the grooves contained in the tire-to-ground contact surface F is 2 to 6, particularly 3 to 5, thus making it possible to achieve a good balance between water discharge efficiency and rigidity. Here, the ground contact surface means a face where a tire is in contact with the ground when the tire is put on a rim, and filled at an internal pressure prescribed in the above-described industrial standard to be placed under a prescribed load. In particular, in a case where a tire according to the present invention is a two-wheeled vehicle tire or a three-wheeled vehicle tire, the ground contact surface means such a face during straight running.

Furthermore, as depicted in the cross-sectional view in FIG. 4, the value of the ratio r/Dw is preferably 15% or more in percentages in the present invention, assuming that r/Dw is the ratio of the radius of curvature, r, to the maximum groove depth Dw of the width-direction groove 11, wherein the radius of curvature is based on the boundary between the groove wall 11W and the groove bottom 11B on the leading side X1. Bringing the ratio of the radius of curvature, r, to the maximum groove depth Dw of the width-direction groove 11 within the above-described range makes it possible to inhibit stress concentration to the boundary, and to enhance the durability of the block, in which the stress is generated on the leading side X1 when traction occurs during running. The value of the ratio r/Dw is more preferably 20 to 300%. In this regard, such stress concentration as generated on the leading side X1 does not occur on the trailing side X2, which accordingly does not need such a condition as above-described. Here, the width-direction groove 11 has been described, and the width-direction groove 12 is the same. The value of the radius of curvature, r, on the leading side X1 can be specifically, for example, 3 mm or more and 8 mm or less.

Furthermore, in the present invention, a plurality of circumferential grooves 21 to 23 are provided to allow a plurality of width-direction grooves 11 and 12 to be in communication with each other on the tread, as shown in FIG. 1. In the present invention, water discharge efficiency is secured by virtue of the width-direction grooves 11 and 12, and thus, the arrangement conditions for the circumferential grooves 21 to 23 are not particularly limited.

In the present invention, assuming that, among the plurality of circumferential grooves provided between a pair of the width-direction grooves 11 and 12, for example, three circumferential grooves 21 to 23 in the example depicted, the circumferential groove 21 the closest to the tire equator CL is referred to as a circumferential center-portion groove, and each of the other circumferential grooves 22 and 23 is referred to as a circumferential shoulder-portion groove, the ratio Ds/Dc of the maximum groove depth Ds of each of the circumferential shoulder-portion grooves 22 and 23 to the maximum groove depth Dc of the circumferential center-portion groove 21 suitably satisfies 0.1 to 0.6. That is, it is preferable that the groove depth of the circumferential center-portion groove 21 the closest to the tire equator CL is set the largest, and that the groove depth of each of the circumferential shoulder-portion grooves 22 and 23 other than the circumferential center-portion groove 21 is set small within the above-described range. This makes it possible to secure rigidity suitably, and enhance the steering stability. The value of the ratio Ds/Dc is more preferably 0.2 to 0.5.

Here, in a case where the plurality of circumferential shoulder-portion grooves 22 and 23 are provided as depicted, the above-described maximum groove depth Ds is defined as the average value of the maximum groove depths of the plurality of circumferential shoulder-portion grooves 22 and 23. Furthermore, as specific conditions for the circumferential shoulder-portion grooves 22 and 23, the groove width can suitably be 4 mm or more and 13 mm or less, and the maximum groove depth can suitably be 0.6 mm or more and 12 mm or less. Furthermore, the angle of each of the circumferential shoulder-portion grooves 22 and 23 to the circumferential direction of the tire can be -45° or more and 45° or less. In this regard, in the present invention, the number of circumferential shoulder-portion grooves is not particularly limited.

In the present invention, the arrangement conditions for the plurality of blocks 31 and 32 defined by the plurality of width-direction grooves 11 and 12 and the plurality of circumferential grooves 21 to 23 are also not particularly limited. For example, in the present invention, the length of each of the blocks 31 and 32 in the circumferential direction of the tire can be 26 mm or more and 41 mm or less. In addition, the length of each of the blocks 31 and 32 in the width direction of the tire can be 15 mm or more and 44 mm or less. Here, the length in the circumferential direction of the tire and the length in the width direction of the tire each means the maximum value in each block.

In addition, in the pattern depicted, shoulder land portions 33 sectioned by the width-direction grooves 11 and 12 and the circumferential grooves 22 and 23 are provided outside the blocks 31 and 32 in the width direction of the tire. In the present invention, the shape and the like of this shoulder land portion 33 are also not particularly limited.

In this regard, in the present invention, the pattern formed with the plurality of width-direction grooves 11 and 12 and the plurality of circumferential grooves 21 to 23 has a shape substantially symmetrical about the tire equator CL, and is arranged repeatedly in the circumferential direction of the tire with a shift corresponding to 1/2 of the arrangement pitch, as depicted. Here, the arrangement pitch of the pattern in the present invention means one repeating unit in the circumferential direction of the tire in a pattern formed with the grooves provided in the tire tread.

In the pneumatic tire 100 according to the present invention, the negative ratio is preferably less than 70%, more preferably in the range of from 10 to 60%, particularly preferably in the range of from 20 to 50%. Bringing the negative ratio within the above-described ranges makes it possible to secure the water discharge efficiency of the tread favorably, and simultaneously maintain the steering stability and the ride quality favorably. Here, the negative ratio is the ratio of the area of the grooves to the area of the surface of the tread assumed to have no groove, and means the ratio of the groove portion excluding sipes to the area of the tread.

In the pneumatic tire 100 according to the present invention, the tread pattern of the tread needs only to satisfy the above-described conditions. Other than this, the details of the structure of the tire, materials to be used, and the like are not particularly limited. For example, the tire can be constituted as below-described.

The backbone of the pneumatic tire 100 depicted is two carcass plies 4 extending in the form of a toroid spanning between a pair of bead portions 3. In the present invention, the carcass ply 4 is formed of textile cords having relatively high elasticity, and arranged in parallel with each other, and the number of the carcass plies can be at least one, and may be three or more. In addition, as depicted, both ends of the carcass ply 4 may each be folded back from the inside of the tire to the outside around the bead core 5 at the bead portion 3 to be thereby held, or may be sandwiched between the bead wires at both sides to be thereby held. Either fixing method may be used.

In the pneumatic tire 100 depicted, a two-layered belt layer 6 is arranged on the outside of the carcass ply 4 in the radius direction of the tire in the tread portion 1. In the present invention, the belt layer 6 can be arranged in the form of at least one layer, may be composed of two or more tilted belt layers arranged in such a manner that the direction of the cords in one layer crosses the direction of the cords in another, or may be a spiral belt composed of one or more rubber-coated cords wound spirally in the circumferential direction of the tire. In addition, examples of a reinforcing material constituting the belt layer 6 include a nylon fiber, aromatic polyamide (tradename: KEVLAR), steel, and the like. Among these, an aromatic polyamide and steel are reinforcing materials that do not stretch at high temperature, and can inhibit the expansion of the tread portion.

In addition, in the pneumatic tire 100 according to the present invention, a bead filler 7 can be arranged outside the bead core 5 in the radius direction of the tire, and an inner liner not depicted can be arranged as the innermost layer of the tire.

Furthermore, in the pneumatic tire 100 according to the present invention, the ratio of the height SWH of the maximum width position of the tire to the height SH of the cross section of the tire is preferably in the range of from 40% to 75%. Bringing the ratio SWH/SH within the range of from 40% to 75% in percentages makes it possible to afford a tire having a suitable ground contact surface and excellent steering stability, wherein SH is the height of the cross section of the tire, and SWH is the height of the maximum width position of the tire. Furthermore, in particular, in a case where a tire according to the present invention is a two-wheeled vehicle tire, the tire makes it possible to enhance the steering stability of the vehicle in a banked state during cornering. Here, the height SH of the cross section of the tire refers to 1/2 of a difference between the outer diameter of the tire and the diameter of a rim prescribed in the above-described industrial standard.

The pneumatic tire 100 according to the present invention can be used as any kind of tire as long as the tire is used as a driving wheel. The tire is suitably a two-wheeled vehicle tire or a three-wheeled vehicle tier, is particularly a motorcycle tire or a motor three-wheeled vehicle tire, and is used suitably as a rear tire for a motorcycle among others. In addition, the pneumatic tire 100 according to the present invention can be used as a tire having any one of a radial structure and a bias structure.

The pneumatic tire 100 according to the present invention has the above-described predetermined shape, has a tread pattern containing a plurality of width-direction grooves 11 and 12 extending across the tread center portion, has excellent water discharge efficiency on a paved road surface and also excellent traction performance, and thus, is useful particularly for an on-road motorcycle that runs mainly on a paved road surface.

### EXAMPLES

The present invention will now be described in more detail with reference to specific Examples.

### (Example 1)

A rear tire having a tire size of 170/60R17M/C for a motorcycle was produced, in which rear tire, a directional pattern containing a plurality of width-direction grooves as depicted in FIG. 1 was provided on the tread. In this sample tire, the plurality of width-direction grooves extended across the tread center portion, and had a convex pattern composed of one circular arc and protruded in the rotational direction of the tire. In addition, this sample tire satisfied the following conditions.
- the number of width-direction grooves contained in the ground contact surface: 3
- the average value Wg of the groove widths of the width-direction grooves, as measured on the tire equator: 9.0 mm
- the ratio Lc/Wg of the average value Lc of the length of the center block in the circumferential direction of the tire, as measured on the tire equator, to the average value Wg of the above-described groove width: 460%
- the ratio r/Dw of the radius of curvature, r, to the maximum groove depth Dw of the width-direction groove: 58%, wherein the radius of curvature was based on the boundary between the groove wall and the groove bottom on the leading side
- the ratio Ds/Dc of the maximum groove depth Ds of the circumferential shoulder-portion groove to the maximum groove depth Dc of the circumferential center-portion groove: 0.4
- negative ratio: 25.6%

The sample tire obtained was put on a rim having a size of MT 4.50 × 17 M/C, mounted on the rear tire of a 1200 cc motorcycle, and filled at an internal pressure of 290 kPa. The front tire used was a commercially available tire having a size of 120/70R19M/C.

### (Evaluation of Water Discharge Efficiency)

The above-described real motorcycle was ridden by a professional rider on a test course that had a paved road surface, and was sprinkled with water up to approximately 1 mm in depth. The water discharge efficiency was thus evaluated. The speed condition was as follows: entering a test course at approximately 40 km/h with the 3rd gear. The vehicle was operated so as to enter the straight course, and be then allowed to run with the accelerator full down until the speed of the vehicle reached 60 km/h or more on a GPS. The speed of the driving wheel was measured at the point of time when 60 km/h was reached. In this regard, the speed of the wheel was measured using a sensor attached to the vehicle body. When the speed of the vehicle was the same, the smaller the speed of the wheel was, less slippage was generated between the road surface and the tire, demonstrating that the water discharge efficiency was good.

### (Comparative Example 1)

The water discharge efficiency was evaluated in the same manner as in Example 1 except that the sample tire was mounted as a rear tire in such a manner that, in the directional pattern, the protruding direction of the convex pattern of the width-direction groove was the direction opposite to the rotational direction of the tire.

These results are shown in the following Table 1.

**[Table 1]**

| | | Example 1 | Comparative Example 1 |
|---|---|---|---|
| Protruding Direction of Convex Pattern of Width-direction Groove | | Rotational Direction of Tire | Direction Opposite to Rotational Direction of Tire |
| Speed of Wheel when Speed of Vehicle Has Reached 60 km/h | Actual Measurement (km/h) | 76.8 | 99.7 |
| | Index (-), Assuming that Value in Example is 100 | 100 | 130 |

As shown in the Table above, the results have verified that allowing the width-direction groove extending across the tread center portion to have a pattern convex in the rotational direction of the tire makes it possible to achieve good water discharge efficiency and to decrease the generation of slippage on a road surface having a water film.

### DESCRIPTION OF SYMBOLS

1: Tread Portion
2: Side-wall Portion
3: Bead Portion
4: Carcass Ply
5: Bead Core
6: Belt Layer
7: Bead Filler
11 and 12: Width-direction Groove
11B: Groove Bottom
11W: Groove Wall
21: Circumferential Center-portion Groove (Circumferential Groove)
22 and 23: Circumferential Shoulder-portion Groove (Circumferential Groove)
31: Center Block (Block)
32: Block
33: Shoulder Land Portion
100: Pneumatic Tire

## Claims

1. A pneumatic tire (100) for use as a driving wheel, comprising, on the tread of the tire (100), a directional pattern containing a plurality of width-direction grooves (11, 12),
wherein, assuming that a half-width region of the tread, as measured from the tire equator (CL) to a tread-to-ground contact end (TE) along the surface of the tire (100) in a cross section of the tread portion (1) in the width direction of the tire (100), is bisected into two regions that are referred to as the tread center portion (Tc) and the tread shoulder portion (Ts) respectively in this order from the tire equator (CL),
the plurality of width-direction grooves (11, 12) extend across the tread center portion (Tc) and have a pattern convex in the rotational direction of the tire (100), and
**characterized in that** the convex pattern of the plurality of width-direction grooves (11, 12) is composed of one circular arc.

2. The pneumatic tire (100) according to claim 1, wherein the ground contact surface comprises 2 to 6 of the width-direction grooves (11, 12).

3. The pneumatic tire (100) according to claim 1 or 2, wherein the average value Wg of the groove widths of the width-direction grooves (11, 12), as measured on the tire equator (CL), is 4 mm or more and 13 mm or less.

4. The pneumatic tire (100) according to any one of claims 1 to 3, wherein the ratio r/Dw of the radius of curvature, r, to the maximum groove depth Dw of the width-direction groove (11, 12) is 15% or more, wherein the radius of curvature is based on the boundary between the groove wall (11W) and the groove bottom (11B) on the leading side of the tire (100).

5. The pneumatic tire (100) according to any one of claims 1 to 4, wherein a plurality of circumferential grooves (21, 22, 23) are provided to allow the plurality of width-direction grooves (11, 12) to be in communication with each other on the tread, and wherein, assuming that, among the plurality of circumferential grooves (21, 22, 23) provided between a pair of the width-direction grooves (11, 12), the circumferential groove (21) the closest to the tire equator (CL) is referred to as a circumferential center-portion groove (21), and another circumferential groove (22, 23) is referred to as a circumferential shoulder-portion groove (22, 23), the ratio Ds/Dc of the maximum groove depth Ds of the circumferential shoulder-portion groove (22, 23) to the maximum groove depth Dc of the circumferential center-portion groove (21) satisfies 0.1 to 0.6.

6. The pneumatic tire (100) according to any one of claims 1 to 5, wherein a plurality of blocks (31, 32) are defined on the tread, and wherein the ratio Lc/Wg is 500% or less, assuming that Lc, as measured on the tire equator (CL), is the average value of the lengths of center blocks (31) located on the tire equator (CL) in the circumferential direction of the tire (100), the center blocks (31) being among the plurality of blocks (31, 32), and that Wg, as measured on the tire equator (CL), is the average value of the groove widths of the width-direction grooves (11, 12).

## Patentansprüche

1. Luftreifen (100) zur Verwendung als Antriebsrad, umfassend auf der Lauffläche des Reifens (100) ein Richtmuster enthaltend eine Vielzahl von in Breitenrichtung verlaufenden Rillen (11, 12),
wobei, angenommen, dass ein halbbreiter Bereich der Lauffläche, gemessen vom Reifenäquator (CL) bis zu einem Ende des Laufflächen-Bodenkontakts (TE) entlang der Reifenoberfläche (100) in einem Querschnitt des Laufflächenabschnitts (1) in Breitenrichtung des Reifens (100), in zwei Bereiche unterteilt ist, die in dieser Reihenfolge vom Reifenäquator (CL) aus als Laufflächenmittelabschnitt (Tc) und Laufflächenschulterabschnitt (Ts) bezeichnet werden,
die Vielzahl der in Breitenrichtung verlaufenden Rillen (11, 12) sich über den Laufflächenmittelabschnitt (Tc) erstreckt und ein in Drehrichtung des Reifens (100) konvexes Muster aufweist, und
**dadurch gekennzeichnet, dass** das konvexe Muster der Vielzahl von in Breitenrichtung verlaufenden Rillen (11, 12) aus einem Kreisbogen besteht.

2. Luftreifen (100) nach Anspruch 1, wobei die Bodenkontaktfläche 2 bis 6 der in Breitenrichtung verlaufenden Rillen (11, 12) umfasst.

3. Luftreifen (100) nach Anspruch 1 oder 2, wobei der Mittelwert Wg der Rillenbreiten der in Breitenrichtung verlaufenden Rillen (11, 12), gemessen am Reifenäquator (CL), 4 mm oder mehr und 13 mm oder weniger beträgt.

4. Luftreifen (100) nach einem der Ansprüche 1 bis 3, wobei das Verhältnis r/Dw des Krümmungsradius r zur maximalen Rillentiefe Dw der in Breitenrichtung verlaufenden Rille (11, 12) 15 % oder mehr beträgt, wobei der Krümmungsradius auf der Grenze zwischen der Rillenwand (11W) und dem Rillenboden (11B) auf der Vorderseite des Reifens (100) basiert.

5. Luftreifen (100) nach einem der Ansprüche 1 bis 4, wobei eine Vielzahl von Umfangsrillen (21, 22, 23) bereitgestellt ist, um die Verbindung zwischen der Vielzahl von in Breitenrichtung verlaufenden Rillen (11, 12) auf der Lauffläche zu ermöglichen, und wobei, angenommen, dass unter der Vielzahl von Umfangsrillen (21, 22, 23), die zwischen einem Paar von Breitenrillen (11, 12) bereitgestellt sind, die dem Reifenäquator (CL) am nächsten liegende Umfangsrille (21) als Umfangsmittelabschnittsrille (21) und eine andere Umfangsrille (22, 23) als Umfangsschulterabschnittsrille (22, 23) bezeichnet wird, das Verhältnis Ds/Dc der maximalen Rillentiefe Ds der Umfangsschulterabschnittsrille (22, 23) zur maximalen Rillentiefe Dc der Umfangsmittelabschnittsrille (21) zwischen 0,1 und 0,6 liegt.

6. Luftreifen (100) nach einem der Ansprüche 1 bis 5, wobei auf der Lauffläche eine Vielzahl von Blöcken (31, 32) definiert ist und wobei das Verhältnis Lc/Wg 500 % oder weniger beträgt, angenommen, dass Lc, gemessen am Reifenäquator (CL), der Mittelwert der Längen von Mittelblöcken (31) ist, die sich am Reifenäquator (CL) in Umfangsrichtung des Reifens (100) befinden, wobei die Mittelblöcke (31) zu der Vielzahl der Blöcke (31, 32) gehören, und dass Wg, gemessen am Reifenäquator (CL), der Mittelwert der Rillenbreiten der in Breitenrichtung verlaufenden Rillen (11, 12) ist.

## Revendications

1. Pneumatique (100) destiné à être utilisé comme roue motrice, comprenant, sur la bande de roulement du pneu (100), un motif directionnel contenant une pluralité de rainures dans le sens de la largeur (11, 12),
dans lequel, en supposant qu'une région de demi-largeur de la bande de roulement, telle que mesurée de l'équateur de pneu (CL) à une extrémité de contact bande de roulement-sol (TE) le long de la surface du pneu (100) dans une section transversale de la portion de bande de roulement (1) dans le sens de la largeur du pneu (100), est divisée en deux régions qui sont appelées la partie centrale de bande de roulement (Tc) et la partie épaulement de bande de roulement (Ts) respectivement dans cet ordre à partir de l'équateur de pneu (CL),
la pluralité de rainures dans le sens de la largeur (11, 12) s'étendent sur la partie centrale de bande de roulement (Tc) et présentent un motif convexe dans le sens de rotation du pneu (100), et
**caractérisé en ce que** le motif convexe de la pluralité de rainures dans le sens de la largeur (11, 12) est composé d'un arc de cercle.

2. Pneumatique (100) selon la revendication 1, dans lequel la surface de contact avec le sol comprend 2 à 6 des rainures dans le sens de la largeur (11, 12).

3. Pneumatique (100) selon la revendication 1 ou 2, dans lequel la valeur moyenne Wg des largeurs de rainure des rainures dans le sens de la largeur (11, 12), telle que mesurée sur l'équateur de pneu (CL), est de 4 mm ou plus et de 13 mm ou moins.

4. Pneumatique (100) selon l'une quelconque des revendications 1 à 3, dans lequel le rapport r/Dw entre le rayon de courbure, r, et la profondeur de rainure maximale Dw de la rainure dans le sens de la largeur (11, 12) est de 15 % ou plus, dans lequel le rayon de courbure est basé sur la limite entre la paroi de rainure (11W) et le fond de rainure (11B) sur le côté avant du pneu (100).

5. Pneumatique (100) selon l'une quelconque des revendications 1 à 4, dans lequel une pluralité de rainures circonférentielles (21, 22, 23) sont prévues pour permettre à la pluralité de rainures dans le sens de la largeur (11, 12) d'être en communication les unes avec les autres sur la bande de roulement, et dans lequel, en supposant que, parmi la pluralité de rainures circonférentielles (21, 22, 23) prévues entre une paire de rainures dans le sens de la largeur (11, 12), la rainure circonférentielle (21) la plus proche de l'équateur de pneu (CL) est appelée rainure centrale circonférentielle (21) et une autre rainure circonférentielle (22, 23) est appelée rainure de partie épaulement circonférentielle (22, 23), le rapport Ds/Dc entre la profondeur maximale de rainure Ds de la rainure de partie épaulement circonférentielle (22, 23) et la profondeur maximale de rainure Dc de la rainure de partie centrale circonférentielle (21) est de 0,1 à 0,6.

6. Pneumatique (100) selon l'une quelconque des revendications 1 à 5, dans lequel une pluralité de blocs (31, 32) sont définis sur la bande de roulement et dans lequel le rapport Lc/Wg est de 500 % ou moins, en supposant que Lc, telle que mesurée sur l'équateur de pneu (CL), est la valeur moyenne des longueurs des blocs centraux (31) situés sur l'équateur de pneu (CL) dans le sens circonférentiel du pneu (100), les blocs centraux (31) étant parmi la pluralité de blocs (31, 32), et que Wg, telle que mesurée sur l'équateur de pneu (CL), est la valeur moyenne des largeurs de rainures des rainures dans le sens de la largeur (11, 12).
